# EUROPÄISCHE PATENTANMELDUNG

(11) **EP 1 358 994 A1**
(43) Veröffentlichungstag der Anmeldung: **05.11.2003**
(21) Anmeldenummer: 03008601.1
(22) Anmeldetag: 15.04.2003
(51) Int. Cl.: B29C 67/00, B22F 3/105

(54) **Vorrichtung und Verfahren zum Herstellen frei geformter Produkte**

(30) Priorität: 03.05.2002 DE 10219984
(71) Anmelder: BEGO medical AG, 28359 Bremen (DE)
(72) Erfinder: Laschützka, Helmut Dr., 27721 Ritterhude (DE); Hagemeister, Frank, 28215 Bremen (DE)
(74) Vertreter: Eisenführ, Speiser & Partner

(57) **Zusammenfassung**

Eine Vorrichtung und ein Verfahren zum Herstellen frei geformter Produkte durch einen datengesteuert verfestigten Schichtaufbau aus pulverförmigem Material . Die Vorrichtung hat einerseits einen (relativ) absenkbaren Tisch und andererseits eine Pulverzufuhr oberhalb des Tisches, eine das Pulver in vorgegebener Schichtdicke oberhalb des Tisches ausbreitende Verteileinrichtung sowie eine das Pulver jeder Schicht partiell verfestigende Energiequelle, die relativ zueinander horizontal bewegbar sind. Insbesondere ist die Horizontalbewegung des Tisches eine Drehbewegung um eine senkrechte Achse, die mit der Absenkbewegung zu einer Spiralbewegung mit einer der Schichtdicke entsprechenden Steigung kombiniert ist, wobei die Pulverzufuhr, die Verteileinrichtung sowie die Energiequelle radial um die Achse angeordnet und kontinuierlich wirksam sind.

## Beschreibung

Die Erfindung betrifft eine Vorrichtung zum Herstellen frei geformter Produkte durch einen Schichtaufbau aus pulverförmigem Material, welches datengesteuert verfestigt wird, mit einem (relativ) absenkbaren Tisch, einer Pulverzufuhr oberhalb des Tisches, einer das Pulver in vorgegebener Schichtdicke oberhalb des Tisches ausbreitenden Verteileinrichtung und mit einer das Pulver jeder Schicht partiell verfestigenden Energiequelle. Sie betrifft auch ein entsprechendes Verfahren.

Eine Vorrichtung der vorstehenden Art ist beispielsweise aus der US-PS 4,863,538 bekannt. Sie dient zur Herstellung individuell geformter Produkte, ohne dass es der zeit- und kostenaufwändigen Herstellung von Modellen bedarf. Daher wird das mit dieser Vorrichtung ausgeübte Verfahren häufig auch als "Rapid Prototyping" bezeichnet.

Mit den bekannten Vorrichtungen der eingangs beschriebenen Art lässt sich jenes Verfahren nur intermittierend ausüben: Zunächst wird von der Pulverzufuhr das für die jeweils nächste Schicht erforderliche Material aufgebracht, dann von der Verteileinrichtung über die Arbeitsfläche zu gleichmäßiger Schichtdicke verteilt und schließlich wird die Energiequelle über die gesamte Arbeitsfläche bewegt, ehe mit der nächsten Schicht diese Stufenfolge von neuem beginnt. Da die aufwändigen Aggregate der bekannten Vorrichtungen nur diskontinuierlich mit jeweils zeitlichem Abstand im Einsatz sind, wird von ihrer Kapazität nur teilweise Gebrauch gemacht; außerdem sind die zwischen den einzelnen Verfahrensstufen erforderlichen Nebenzeiten beträchtlich.

Der Erfindung liegt die Aufgabe zu Grunde, die Kapazitätsnutzung der Vorrichtungsaggregate besser zu nutzen und insbesondere eine kontinuierliche Verfahrensführung zu erreichen.

Der Vorrichtungsaspekt der Erfindung löst diese Aufgabe dadurch, dass einerseits der Tisch, andererseits die Pulverzufuhr und die Verteileinrichtung sowie die Energiequelle relativ zueinander horizontal bewegbar sind. Dadurch lassen sich hintereinander mehrere Tische von den gleichen Aggregaten bearbeiten, und es ist beispielsweise möglich, dass auf einem Tisch bereits die Verfestigung der zuletzt aufgebrachten Pulverschicht erfolgt, während eine solche auf einem benachbarten Tisch aufgebracht wird.

Nach einer bevorzugten Weiterbildung der Erfindung ist die Horizontalbewegung des Tisches eine Drehbewegung um eine senkrechte Achse, und die Pulverzufuhr, die Verteileinrichtung und die Energiequelle sind radial um die Achse angeordnet. Mit einer solchen Vorrichtung lässt sich ein ununterbrochener Aufbau der Produkte bewerkstelligen, wobei vorzugsweise die dabei erforderliche vertikale Abstandsvergrößerung zwischen dem Tisch und den Aggregaten dadurch zustande kommt, dass der Tisch abgesenkt wird und dessen Absenkund Drehbewegung zu einer Spiralbewegung mit einer der Schichtdicke entsprechenden Steigung kombiniert ist, wobei die Pulverzufuhr, die Verteileinrichtung sowie die Energiequelle kontinuierlich wirksam sind.

Das damit korrespondierende Verfahren zur Herstellung frei geformter Produkte aus pulverförmigem Material, bei dem das Pulver in senkrecht aufeinanderfolgenden Schichten auf eine Unterlage aufgebracht, gleichmäßig verteilt und datengesteuert partiell verfestigt wird, zeichnet sich dadurch aus, dass das Pulver in einer durchgehenden Schicht um einen Kreismittelpunkt spiralig aufgetragen, verteilt und partiell verfestigt wird.

Die Zeichnung veranschaulicht die Erfindung an zwei Ausführungsbeispielen, und zwar zeigt:
- Fig. 1: in perspektivischer Schemadarstellung einen Drehtisch zur Herstellung kleinteiliger, beispielsweise dentaler Produkte; und
- Fig. 2: ebenfalls in perspektivischer Schemadarstellung eine Vorrichtung mit mehreren Tischen.

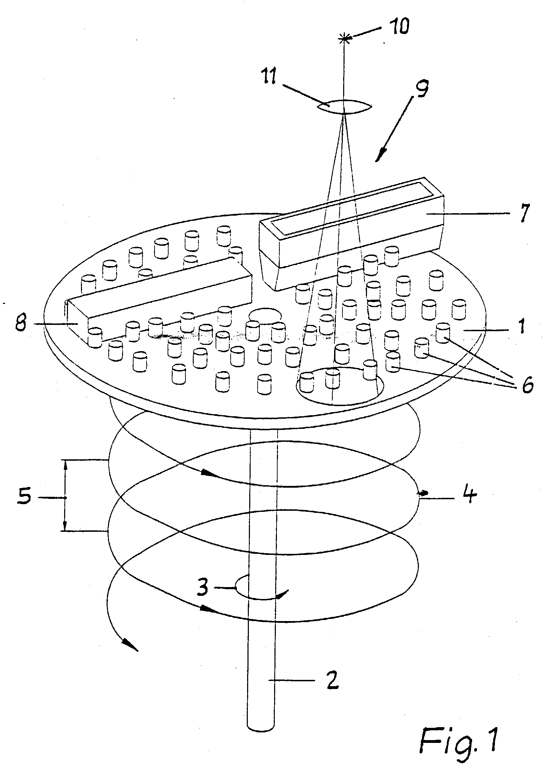

Bei der Ausführungsform in Fig. 1 ist der Tisch 1 um die Drehachse 2 im Drehsinne des Pfeiles 3 drehbar. Ferner ist der Tisch in Richtung der Achse 2 absenkbar, so dass bei gleichzeitiger Drehung und Absenkung jeder Radius seiner Oberfläche eine Spiralbewegung gemäß der gepfeilten Spirallinie 4 ausführt. Die Steigung 5 dieser Spiralbewegung entspricht der Schichtdicke der auf den Tisch aufzubringenden Schicht aus pulverförmigem Werkstoff für die herzustellenden Produkte 6.

Über dem Tisch sind die zur Durchführung des Produktionsverfahrens erforderlichen Aggregate derart angeordnet, dass sie im Laufe einer Tischumdrehung dessen gesamte Fläche überstreichen. Das gilt als erstes für die Pulverzufuhr 7, welche das pulverförmige Rohmaterial für die Produkte auf den Tisch aufbringt. Alsdann für die Verteileinrichtung 8, die für eine gleichmäßige Dicke der Pulverschicht sorgt, und schließlich für die Energiequelle 9, die hier als Strahl eines Lasers 10 dargestellt ist, welchen eine Optik 11 nacheinander auf die einzelnen Bereiche der Oberfläche des Tisches 1 und damit der darauf befindlichen Pulverschicht lenkt. Die schematische Zeichnung zeigt die Pulverzufuhr 7 und die Verteileinrichtung 8 neben den fertigen Produkten 6 nach Entfernung des überschüssigen Pulvermaterials; es versteht sich von selbst, dass die Aggregate 7 und 8 sich oberhalb der Produkte 6 befinden, wenn diese fertiggestellt sind und der Tisch 1 seine spiralige Dreh- und Absenkbewegung abgeschlossen hat.

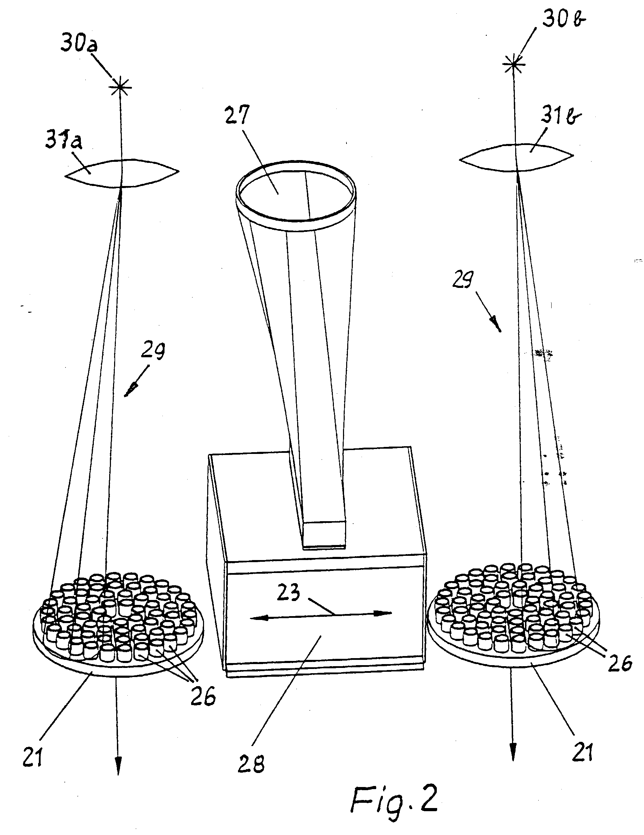

Die Ausführungsform der Fig. 2 zeigt zwei Tische 21 in horizontalem Abstand, der vergrößert dargestellt ist. Die Tische 21 sind in gleicher Höhe stationär angeordnet, und eine Pulverzufuhr 27 mit angeschlossener Verteileinrichtung 28 ist horizontal in Richtung des Pfeiles 23 beweglich, so dass sie sich mal über dem einen, mal über dem anderen Tisch 21 befindet.

Während sich die Pulverzufuhr und Verteileinrichtung 27, 28 über dem einen Tisch 21 befindet, erfolgt auf dem anderen Tisch 21 die partielle Verfestigung der zuvor aufgebrachten Pulverschicht. Im Beispiel erfolgt dies mit Hilfe zweier Laserstrahlen 30a und 30b und Optiken 31a und 31b; es ist jedoch auch möglich, nur einen Laser 30 einzusetzen, dessen Strahl optisch mal auf den einen Tisch 21, mal auf den anderen Tisch 21 gelenkt wird, auf denen - ähnlich dem vorhergehenden Beispiel - kleinteilige Produkte 26 in mehr oder minder fertiggestellter Form dargestellt sind.

## Patentansprüche

1. Vorrichtung zum Herstellen frei geformter Produkte durch einen Schichtaufbau aus pulverförmigem Material, welches datengesteuert verfestigt wird, mit einem (relativ) absenkbaren Tisch (1; 21), einer Pulverzufuhr (7; 27) oberhalb des Tisches, einer das Pulver in vorgegebener Schichtdicke oberhalb des Tisches ausbreitenden Verteileinrichtung (8; 28) und mit einer das Pulver jeder Schicht partiell verfestigenden Energiequelle (10; 30),
**dadurch gekennzeichnet, dass** einerseits der Tisch (1; 21), andererseits die Pulverzufuhr (7; 27) und die Verteileinrichtung (8; 28) sowie die Energiequelle (10; 30) relativ zueinander horizontal bewegbar sind.

2. Vorrichtung nach Anspruch 1, **dadurch gekennzeichnet, dass** die Horizontalbewegung des Tisches (1) eine Drehbewegung um eine senkrechte Achse (2) ist und die Pulverzufuhr (7), die Verteileinrichtung (8) und die Energiequelle (10) radial um die Achse (2) angeordnet sind.

3. Vorrichtung nach Anspruch 2, **dadurch gekennzeichnet, dass** die Absenkund die Drehbewegung zu einer Spiralbewegung (4) mit einer der Schichtdicke entsprechenden Steigung (5) kombiniert und die Pulverzufuhr (7), die Verteileinrichtung (8) sowie die Energiequelle (10) kontinuierlich wirksam sind.

4. Vorrichtung nach Anspruch 1, **dadurch gekennzeichnet, dass** mindestens zwei Tische (21) nebeneinander angeordnet und die Pulverzufuhr (27), die Verteileinrichtung (28) sowie die Energiequelle (30) nacheinander horizontal über die Tische bewegbar sind.

5. Verfahren zur Herstellung frei geformter Produkte aus pulverförmigem Material, bei dem das Pulver in senkrecht aufeinanderfolgenden Schichten auf eine Unterlage aufgebracht, gleichmäßig verteilt und datengesteuert partiell verfestigt wird,
**dadurch gekennzeichnet, dass** das Pulver in einer durchgehenden Schicht um einen Kreismittelpunkt spiralig aufgetragen, verteilt und partiell verfestigt wird.
